# EUROPÄISCHE PATENTANMELDUNG

(11) **EP 4 553 591 A1**
(43) Veröffentlichungstag der Anmeldung: **14.05.2025**
(21) Anmeldenummer: 24207904.4
(22) Anmeldetag: 21.10.2024
(51) Int. Cl.: G05B 19/042

(54) **FÖRDERSYSTEM ZUM TRANSPORT EINES FÖRDERGUTS, VERFAHREN ZUR ANPASSUNG VON ZONEN EINES FÖRDERSYSTEMS, COMPUTERPROGRAMM SOWIE VORRICHTUNG ZUR DATENVERARBEITUNG**

(30) Priorität: 10.11.2023 DE 102023131283
(71) Anmelder: Murrelektronik GmbH, 71570 Oppenweiler (DE)
(72) Erfinder: Prein, Olaf, 32676 Lügde-Rischenau (DE); Bosch, Marco, 3235 Weilheim a. d. Teck (DE)
(74) Vertreter: Bösherz Goebel Patentanwälte

(57) **Zusammenfassung**

Die Erfindung betrifft ein Fördersystem (100) zum Transport eines Förderguts (11 ... 16), umfassend eine Fördereinrichtung (21 ... 26), die ausgebildet ist, das Fördergut (11 ... 16) entlang einer Förderstrecke (30) zu transportieren, wobei die Förderstrecke (30) in mehrere Zonen (31 ... 36) unterteilt ist.

## Beschreibung

Die vorliegende Erfindung betrifft ein Fördersystem zum Transport eines Förderguts, ein Verfahren zur Anpassung von Zonen eines Fördersystems sowie ein Computerprogramm und eine Vorrichtung zur Datenverarbeitung zur Durchführung eines solchen Verfahrens.

Fördersysteme sind prinzipiell aus dem Stand der Technik bekannt. Beispielsweise beschreibt die Druckschrift DE 10 2016 124 250 A1 eine Vorrichtung und ein Verfahren zum Umgang mit hintereinander bewegten Stückgütern.

Es ist eine Aufgabe der vorliegenden Erfindung, ein verbessertes Fördersystem sowie ein verbessertes Verfahren zur Anpassung von Zonen eines Fördersystems bereitzustellen.

Diese Aufgabe wird gelöst durch die Gegenstände der unabhängigen Ansprüche.

Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Fördersystem beschrieben sind, selbstverständlich auch im Zusammenhang mit dem erfindungsgemäßen Verfahren, der erfindungsgemäßen Vorrichtung sowie dem erfindungsgemäßen Computerprogramm, und jeweils umgekehrt, so dass bezüglich der Offenbarung zu den einzelnen Erfindungsaspekten stets wechselseitig Bezug genommen wird bzw. werden kann.

Gemäß einem ersten Aspekt wird ein Fördersystem zum Transport eines Förderguts angegeben.

Das Fördersystem umfasst dabei eine Fördereinrichtung, die ausgebildet ist, das Fördergut entlang einer Förderstrecke zu transportieren, wobei die Förderstrecke in mehrere Zonen unterteilt ist. Weiter kann das Fördersystem wenigstens eine Bilderfassungseinrichtung umfassen, die ausgebildet ist, zumindest einen Abschnitt der Förderstrecke in wenigstens einer Bildinformation zu erfassen. Das Fördersystem kann außerdem eine Auswertungseinrichtung umfassen, die ausgebildet ist, die erfasste Bildinformation auszuwerten und das Fördergut darin zu ermitteln Ferner kann das Fördersystem eine Steuereinrichtung aufweisen, die ausgebildet ist, die Zonen basierend auf dem ermittelten Fördergut hinsichtlich ihrer Größe und/oder Anzahl und/oder Geschwindigkeit anzupassen.

Das Fördersystem dient insbesondere dazu, eine Förderstrecke in mehrere Zonen zu unterteilen und diese individuell anzupassen.

Dazu umfasst das Fördersystem zunächst eine Fördereinrichtung, die ausgebildet ist, das Fördergut entlang einer Förderstrecke zu transportieren.

Ein Fördergut kann dabei ein Objekt sein, wie beispielsweise ein Werkstück, welches entlang einer Förderstrecke gefördert wird. Insbesondere wird das Fördergut dabei innerhalb einer Industrieeinrichtung von einer ersten Position zu mindestens einer zweiten Position gefördert. An den jeweiligen Positionen können dann Bearbeitungs- oder Verarbeitungsschritte des Förderguts vorgenommen werden, insbesondere teilweise oder vollständig automatisiert.

Die Fördereinrichtung kann ein oder mehrere Fördermittel aufweisen, um das Fördergut fortzubewegen. Es versteht sich, dass die Fördereinrichtung auch ausgebildet sein kann, mehrere unabhängig voneinander ausgebildete und zueinander beabstandete Fördergüter zu transportieren, insbesondere gleichzeitig.

Weiter kann die Fördereinrichtung ein oder mehrere Rollen, Räder und/oder Bänder aufweisen, die in zumindest einer Richtung beweglich, insbesondere rotationsfähig sind, um das Fördergut entlang einer Förderstrecke zu transportieren, welche sie aufspannen bzw. definieren. Die Rollen und/oder Räder und/oder Bänder sind somit vorteilhafterweise jeweils als Fördermittel oder als Teil eines Fördermittels der Fördereinrichtung vorgesehen. Die Förderstrecke kann insbesondere als endlose Förderstrecke ausgebildet sein.

Die Förderstrecke ist insbesondere in mehrere Zonen unterteilt. Beispielsweise kann die Förderstrecke mindestens zwei, drei, vier, fünf, zehn oder mehr Zonen aufweisen. Die Zonen können dabei sowohl eine feste, fixe und/oder vordefinierte Größe und/oder Anzahl aufweisen, als auch eine variable, verstellbare und/oder einstellbare Größe und/oder Anzahl. Insbesondere kann pro Zone zumindest ein Fördermittel vorgesehen sein.

Die Zonen können vorteilhafterweise als Teile der Förderstrecke vorgesehen sein, welche sich unabhängig hinsichtlich einer Geschwindigkeit der Förderung des Förderguts in diesem Teil ansteuern lassen. Weiter kann innerhalb einer jeweiligen Zone die Geschwindigkeit der Förderung des Förderguts konstant sein, die Geschwindigkeit der Förderung in unterschiedlichen Zonen sich jedoch ggf. unterscheiden. Bspw. kann pro Zone zumindest ein Fördermittel vorgesehen sein, welches sich unabhängig von dem wenigstens einen Fördermittel der anderen Zonen ansteuern lässt.

Insbesondere können alle Zonen in einem Grundzustand eine im Wesentlichen gleiche Größe aufweisen. Alternativ oder zusätzlich ist die Größe und/oder Geschwindigkeit (in) jeder Zone individuell einstellbar, entweder in Stufen oder stufenlos. Vorzugsweise definiert zumindest jedes Fördermittel eine einzelne bzw. eigene Zone.

Ferner ist es möglich, dass das Fördersystem wenigstens eine Bilderfassungseinrichtung umfasst, die ausgebildet ist, zumindest einen Abschnitt der Förderstrecke in wenigstens einer Bildinformation zu erfassen. Das Fördersystem kann auch mehrere Bilderfassungseinrichtungen aufweisen, die jeweils ausgebildet sind, einen oder mehrere Abschnitte der Förderstrecke in mehreren Bildinformationen zu erfassen.

Insbesondere ist die Bilderfassungsvorrichtung bzw. sind die Bilderfassungsvorrichtungen derart ausgebildet, dass sie mehrere, insbesondere alle, der Zonen in einer Bildinformationen erfassen können. Alternativ ist pro Zone zumindest eine Bilderfassungsvorrichtung vorgesehen.

Die Bilderfassungseinrichtung kann dabei ausgebildet sein, zumindest eine Bildinformation zu erfassen. Dazu kann die Bilderfassungseinrichtung einen oder mehrere Sensoreinrichtungen, beispielsweise CMOS-Sensoren, aufweisen, die eine Bildinformation in einem oder mehreren Bildern, insbesondere einem Bilderstrom, erfassen können. Insbesondere ist die Bilderfassungseinrichtung ausgebildet, eine Bildinformation regelmäßig, periodisch und/oder kontinuierlich zu erfassen.

Es kann auch eine Auswertungseinrichtung vorgesehen sein, die ausgebildet ist, die erfasste Bildinformation auszuwerten. Dazu kann die Auswertungseinrichtung eine oder mehrere Prozessoreinrichtungen aufweisen oder zumindest Zugriff darauf haben.

Die Auswertungseinrichtung ist dabei insbesondere ausgebildet einen oder mehrere Bilderkennungsalgorithmen durchzuführen oder durchführen zu lassen, um das Fördergut in der erfassten Bildinformation zu ermitteln. Dazu kann die Auswertungseinheit mit der Bilderfassungseinrichtung oder den Bilderfassungseinrichtungen gekoppelt sein und die Bildinformation davon abrufen oder bereitgestellt bekommen. Die Auswertungseinrichtung kann auch einen oder mehrere, insbesondere nichtflüchtige, Speichereinrichtungen aufweisen, in denen eine oder mehrere Bildinformationen gespeichert sein können.

Das Fördersystem kann auch eine Steuereinrichtung umfassen, die ausgebildet ist, mindestens eine der Zonen basierend auf dem ermittelten Fördergut hinsichtlich ihrer Größe und/oder Anzahl und/oder Geschwindigkeit (d. h. insbesondere Geschwindigkeit des Transports des Förderguts in der Zone) anzupassen. Die Steuereinrichtung ist dabei insbesondere mit der Auswertungseinrichtung gekoppelt und kann von diesen Informationen in Bezug auf das Fördergut bereitstellen oder davon abrufen, um zumindest eine Zone in ihrer Größe anzupassen bzw. zu verändern. Eine Größe meint vorliegend insbesondere eine Länge und/oder Breite und/oder eine Erstreckung, insbesondere in Förderrichtung. Insbesondere können eine oder mehrere Zonen zu einer Zoneneinheit zusammengefasst werden und/oder eine Zone in mehrere Zoneneinheiten geteilt werden.

Durch das Fördersystem ist es möglich, eine Förderstrecke in mehrere Zonen zu unterteilen und diese individuell anzupassen. Es wird somit eine besonders verzögerungs- und störungsfreie Förderung und Bearbeitung eines oder mehrere Fördergüter ermöglicht. Insbesondere kann durch die erfindungsgemäße Lösung auf starre Zonen, die jeweils eine Lichtschranke aufweisen, verzichtet werden und stattdessen mit einer Bilderfassungseinrichtung mehrere Zonen gleichzeitig erfasst und dynamisch angepasst werden.

Eine Anpassung der Zonen und insbesondere der Größe und/oder Anzahl und/oder Geschwindigkeit der Zonen kann bevorzugt dadurch erfolgen, dass die Steuereinrichtung ein oder mehrere der Fördermittel einer Zone hinzugefügt oder daraus entfernt. Die Zone ist bspw. dadurch definiert, dass innerhalb der Zone die Fördermittel gleich angesteuert werden, z. B mit gleicher Geschwindigkeit.

Ferner ist es denkbar, dass die Auswertungseinrichtung ausgebildet ist, einen Größenparameter in der erfassten Bildinformation zu ermitteln, welcher für eine Größe des Förderguts, und insbesondere für die Ausdehnung des Förderguts in Förderrichtung, spezifisch ist, insbesondere diese quantifiziert. Dabei kann die Steuereinrichtung ausgebildet sein, die Größe von zumindest einer Zone basierend auf dem ermittelten Größenparameter anzupassen. Die Auswertungseinrichtung kann dazu geeignete Bilderkennungsalgorithmen verwenden, wie zuvor beschrieben, um einen oder mehrere Größenparameter in der Bildinformation zu ermitteln. Der Größenparameter umfasst damit vorzugsweise einen Hinweis auf einen oder mehrere Dimensionen des Förderguts und insbesondere eine Ausdehnung des Förderguts in Förderrichtung, welche auch als Länge bezeichnet werden kann.

Der Größenparameter kann auch einen Hinweis auf eine Breite des Förderguts umfassen, welche sich im Wesentlichen senkrecht zur Förderrichtung erstreckt. Ebenso kann der Größenparameter einen Hinweis auf die Höhe enthalten, welche sich im Wesentlichen senkrecht von einer Förderoberfläche, auf der das Fördergut transportiert wird, und/oder senkrecht zur Breite und Länge, erstreckt. Insbesondere quantifiziert der Größenparameter eine oder mehrere der vorgenannten Dimensionen, beispielsweise in Zentimetern oder Metern.

Die Steuereinrichtung kann ausgebildet sein, die Größe und/oder Anzahl und/oder Geschwindigkeit zumindest einer der Zonen basierend auf diesem ermittelten Größenparameter anzupassen. Insbesondere ist die Steuereinrichtung ausgebildet, die Länge und/oder Breite der zumindest einer der Zonen basierend auf dem Größenparameter einzustellen bzw. zu verändern. Hierdurch wird es ermöglicht, eine oder mehrere Zonen an eine tatsächliche Größe eines Förderguts individuell anzupassen.

Außerdem ist es möglich, dass die Steuereinrichtung ausgebildet, die Größen von mehreren Zonen unterschiedlich zu definieren, um unterschiedliche Eigenschaften, und vorzugsweise Größen des Fördergutes, beim Transport zu berücksichtigen. Insbesondere ist die Steuereinrichtung ausgebildet, Größen des Fördergutes beim Transport derart zu berücksichtigen, sodass die Förderstrecke durch die Zonen in Abschnitte mit unterschiedlicher Kapazität unterteilt sind. Beispielsweise bilden eine oder mehrere Zoneneinheiten einen ersten Abschnitt und ein oder mehrere weitere Zoneneinheiten einen zweiten Abschnitt, innerhalb welcher unterschiedliche, insbesondere unterschiedlich große viele Fördergüter aufgenommen und individuell verarbeitet werden können. Hierdurch ist es möglich, Zonen bzw. Zoneneinheiten individuell auf die Anforderungen des Förderguts anzupassen.

Es ist außerdem denkbar, dass die Auswertungseinrichtung ausgebildet ist, eine Kante des Förderguts in der erfassten Bildinformation zu ermitteln, wobei die Steuereinrichtung ausgebildet sein kann, die Größe und/oder Anzahl und/oder Geschwindigkeit der Zonen basierend auf der ermittelten Kante anzupassen. Die Auswertungseinrichtung ist insbesondere ausgebildet, eine oder mehrere Kanten in der Bildinformation zu ermitteln, insbesondere durch geeignete Bilderkennungsalgorithmen, wie zuvor beschrieben. Bei der Kante handelt es sich insbesondere um eine oder mehrere führende Kanten, also einer in Fahrtrichtung ersten bzw. vordersten Kante, die insbesondere einen Beginn des Förderguts definiert. Hierdurch wird eine besonders genaue Steuerung der Zonen bzw. der Zonengrößen ermöglicht.

Weiter kann die Steuereinrichtung ausgebildet sein, eine Geschwindigkeit in zumindest einer Zone auf Basis der Auswertung zu steuern. Dabei kann die Steuereinrichtung ausgebildet sein, die Geschwindigkeit in zumindest einer, insbesondere mehreren Zonen anzupassen. Vorzugsweise kann die Steuereinrichtung ausgebildet sein, die Geschwindigkeit in den mehreren Zonen auf Basis der Auswertung unterschiedlich zu steuern. Insbesondere ist die Steuereinrichtung ausgebildet, hierzu eine Bewegungs- und/oder Fördergeschwindigkeit der Fördermittel anzupassen. Die Steuereinrichtung legt dafür bspw. die Auswertung des ermittelten Förderguts und insbesondere den oder die ermittelten Größenparameter und/oder die Kante bzw. Kanten zugrunde, um die Geschwindigkeit zu steuern. Hierdurch ist es möglich, einen Förderfluss besonders genau zu steuern. Die Geschwindigkeit in einer Zone ist insbesondere die Geschwindigkeit, mit welcher das Fördergut in dieser Zone transportiert wird und/oder mit welcher das Fördermitteln in dieser Zone betrieben wird.

Außerdem ist die Steuereinrichtung vorteilhafterweise ausgebildet, eine Richtung in zumindest einer der Zonen und vorzugsweise in den mehreren Zonen auf Basis der Auswertung, insbesondere unterschiedlich, zu steuern. Insbesondere ist die Steuereinrichtung ausgebildet, eine Bewegungs- und/oder Förderrichtung der Fördermittel anzupassen. Dabei kann die Steuereinrichtung ausgebildet sein, die Richtung in zumindest einer, insbesondere mehreren Zonen anzupassen. Die Steuereinrichtung legt dafür bspw. die Auswertung des ermittelten Förderguts und insbesondere den oder die ermittelten Größenparameter und/oder die Kante bzw. Kanten zugrunde, um die Richtung zu steuern. Hierdurch ist es möglich, einen Förderfluss besonders genau zu steuern.

Es ist außerdem möglich, dass die Steuereinrichtung ausgebildet ist, zumindest zwei Zonen und/oder die mehreren Zonen jeweils unabhängig voneinander zu steuern. Insbesondere ist die Steuereinrichtung ausgebildet, mehrere, insbesondere alle Zonen hinsichtlich einer Geschwindigkeit und/oder Richtung des Transports in den Zonen und/oder der Abstände des Förderguts zueinander individuell einzustellen. Dabei kann insbesondere jede Zone eine eigene Steuereinheit aufweisen oder ihr zugeordnet sein, welche die Fördermittel steuert und welche durch die Steuereinrichtung angesteuert wird. Auf diese Weise wird eine besonders exakte und individuelle Steuerung ermöglicht.

Es ist möglich, dass die Fördereinrichtung als ein Förderband ausgebildet ist, um das Fördergut in der Form von Paketen zu transportierten. Insbesondere ist die Fördereinrichtung als ein Förderband umfassend mehrere Förderbandeinheiten ausgebildet, die unmittelbar aneinander anschließen und die insbesondere hinsichtlich ihrer Größe verstellbar bzw. einstellbar sind. Dazu können die mehreren Förderbandeinheiten mit einem dehnbaren bzw. flexiblen Förderbandabschnitt versehen sein, der beispielsweise über längsverschiebliche bzw. entlang der Förderrichtung verschiebbare Fördermittel verfügt und so eine oder mehrere Zonen individuell in ihrer Größe einstellen kann. Das Fördergut ist in dieser Weiterbildung insbesondere als Paket ausgebildet, das typischerweise eine im Wesentlichen rechteckige bzw. quaderförmige Außenkontur aufweist. Damit kann eine besonders effiziente Förderung eines Pakets ermöglicht werden.

Es ist außerdem möglich, dass die Bilderfassungseinrichtung als eine Kamera ausgeführt ist, wobei die Bildinformation als eine Kameraaufzeichnung ausgeführt ist, wobei der durch die Kamera erfasste Abschnitt mehrere, vorzugsweise mindestens zwei oder mindestens drei oder mindestens vier oder mindestens fünf, der Zonen umfasst, welche somit gleichzeitig durch die Kamera zur Zonenanpassung überwacht werden. Hierdurch wird eine besonders effiziente und damit kostengünstige Erfassung ermöglicht.

Gemäß einem weiteren Aspekt wird ein Verfahren zur Anpassung von Zonen eines Fördersystems angegeben, wobei das Fördersystem eine Fördereinrichtung umfasst, bei welcher Fördergut entlang einer Förderstrecke transportiert wird und die Förderstrecke in die Zonen mit unterschiedlicher Größe und/oder Geschwindigkeit unterteilt ist.

Das Verfahren umfasst dabei die Schritte Erfassen von wenigstens einer Bildinformation, wobei die wenigstens eine Bildinformation aus einer Bilderfassung mittels einer Bilderfassungseinrichtung resultiert, bei welcher zumindest ein Abschnitt der Förderstrecke erfasst wurde, Auswerten der erfassten Bildinformation, um das Fördergut zu ermitteln, und Initiieren einer Anpassung der Zonen hinsichtlich ihrer Größe und/oder Anzahl und/oder Geschwindigkeit basierend auf dem ermittelten Fördergut. Das Verfahren eignet sich insbesondere durch ein zuvor beschriebenes Fördersystems durchgeführt oder zumindest bewirkt zu werden.

Ferner ist es möglich, dass die Verfahrensschritte während eines Betriebs der Fördereinrichtung und eines Transports des Förderguts durch die Zonen durchgeführt werden, um die Zonen und vorzugsweise die Größe und/oder Anzahl und/oder Geschwindigkeit der Zonen dynamisch an das aktuell transportierte Fördergut anzupassen.

Ebenfalls Gegenstand der Erfindung ist eine Vorrichtung zur Datenverarbeitung, umfassend Mittel zur Ausführung der Schritte des erfindungsgemäßen Verfahrens. Damit bringt die erfindungsgemäße Vorrichtung die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Als der Computer kann eine Datenverarbeitungsvorrichtung, bspw. die erfindungsgemäße Vorrichtung, vorgesehen sein, welche das Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass der Computer zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Der Computer kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann der Computer als ein oder mehrere Steuergeräte, d. h. auch als ein System aus Steuergeräten, ausgeführt sein. Der Computer kann bspw. auch in einer Cloud und/oder als ein Server vorgesehen sein, um über die Schnittstelle die Datenverarbeitung für eine lokale Anwendung zur Verfügung zu stellen. Auch ist es möglich, dass der Computer als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine Draufsicht einer Ausführungsform eines Fördersystems zum Transport eines Förderguts in einem ersten Zustand;
- Fig. 2: eine Draufsicht des Fördersystems aus Fig. 1 in einem zweiten Zustand; und
- Fig. 3: eine Draufsicht des Fördersystems aus Fig. 1 in einem dritten Zustand.

In den Figuren bezeichnen gleiche Bezugszeichen gleiche oder ähnliche Merkmale.

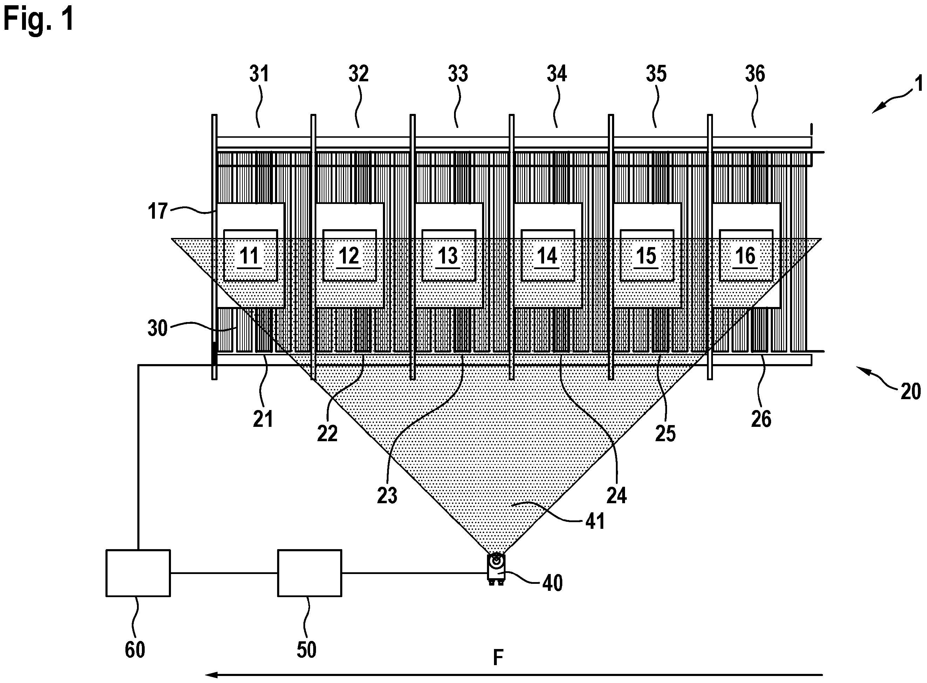

Fig. 1 zeigt eine Draufsicht einer Ausführungsform eines Fördersystems 1 zum Transport eines Förderguts in einem ersten Zustand. Dabei ist in dieser Fig. 1 beispielhaft das transportierte Fördergut durch sechs Fördergüter 11 bis 16 abgebildet.

Das Fördersystem 1 umfasst dabei eine Fördereinrichtung 20 umfassend mehrere Fördereinheiten 21 bis 26, die ausgebildet ist, das Fördergut 11 bis 16 entlang einer Förderstrecke 30 zu transportieren.

Die Förderstrecke 30 kann dabei in mehrere Zonen 31 bis 36 unterteilt sein, vorliegend in dieser Fig. 1 beispielhaft als gleich große bzw. gleichverteilte Zonen abgebildet.

Das Fördersystem 1 umfasst auch eine Bilderfassungseinrichtung 40, die ausgebildet ist, zumindest einen Abschnitt 41 der Förderstrecke 30 in wenigstens einer Bildinformation zu erfassen.

Das Fördersystem 1 umfasst auch eine Auswertungseinrichtung 50, die ausgebildet ist, die erfasste Bildinformation auszuwerten und das jeweilige Fördergut 11 bis 16 darin zu ermitteln.

Das Fördersystem 1 umfasst auch eine Steuereinrichtung 60, die ausgebildet ist, die Zonen 31 bis 36 basierend auf dem jeweiligen ermittelten Fördergut 11 bis 16 hinsichtlich ihrer Größe anzupassen.

Dabei ist die Auswertungseinrichtung 50 ausgebildet, einen Größenparameter in der erfassten Bildinformation zu ermitteln, welcher für eine Größe des jeweiligen Förderguts 11 bis 16, insbesondere für die Ausdehnung des jeweiligen Förderguts 11 bis 16 in Förderrichtung F, spezifisch ist, insbesondere diese quantifiziert. Dabei kann die Steuereinrichtung 60 ausgebildet sein, die Größe der Zonen 31 bis 36 basierend auf dem ermittelten Größenparameter anzupassen.

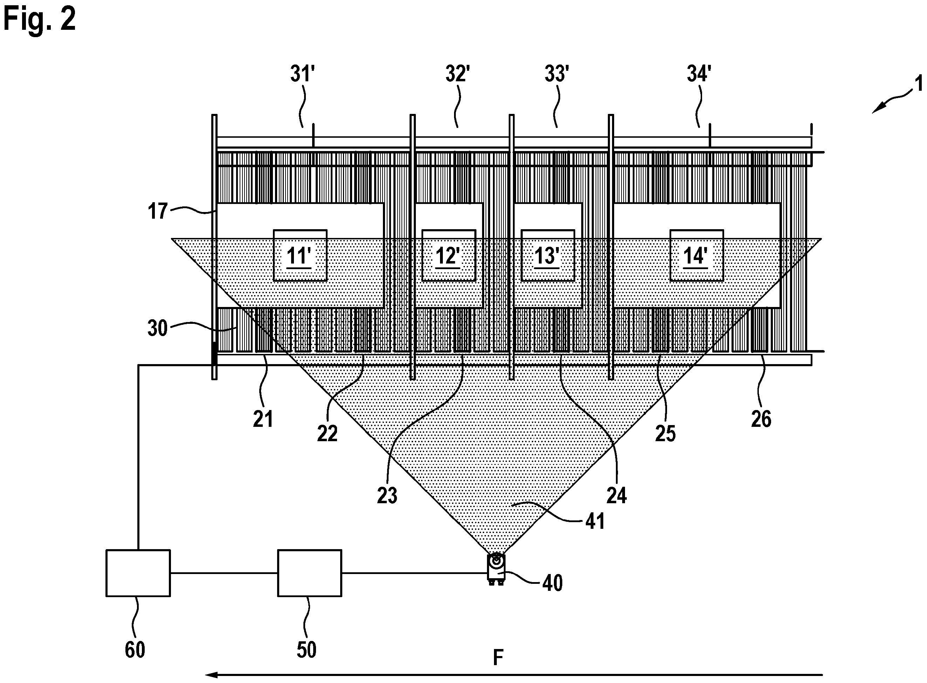

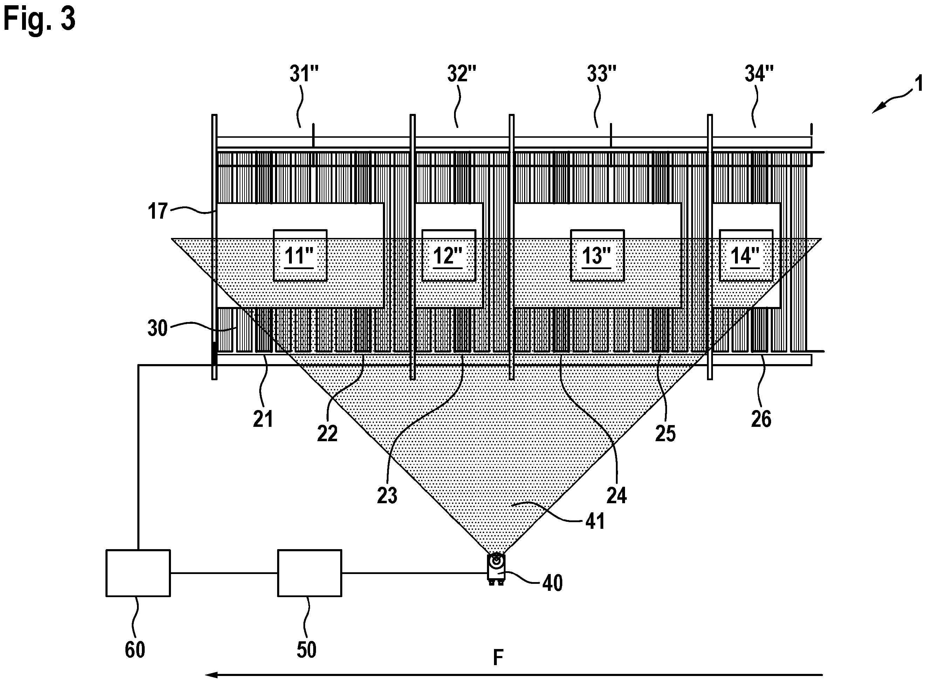

Die Steuereinrichtung 60 ist weiter ausgebildet, die Größen der Zonen 31 bis 36 unterschiedlich zu definieren, um unterschiedliche Eigenschaften und vorzugsweise Größen des jeweiligen Fördergutes 11 bis 16 beim Transport zu berücksichtigen, sodass bevorzugt die Förderstrecke 30 durch die Zonen 31 bis 36 in Abschnitte mit unterschiedlicher Kapazität unterteilt sind, wie dies insbesondere noch im Zusammenhang mit Fig. 2 und 3 erläutert werden wird.

Die Auswertungseinrichtung 50 kann dabei auch ausgebildet sein, eine Kante 17 des Förderguts 11 in der erfassten Bildinformation zu ermitteln, wobei lediglich eine Kante 17 des ersten Förderguts beispielhaft mit einem Bezugszeichen versehen ist. Die Steuereinrichtung 60 ist in diesem Fall ausgebildet, die Größe der Zonen 31 bis 36 basierend auf der ermittelten Kante 17 anzupassen.

Die Steuereinrichtung 60 kann auch ausgebildet sein, eine Geschwindigkeit und/oder eine Richtung in den Zonen 31 bis 36 auf Basis der Auswertung unterschiedlich zu steuern.

Die Steuereinrichtung 60 kann auch ausgebildet sein, die Zonen 31 bis 36 jeweils unabhängig voneinander zu steuern, insbesondere hinsichtlich einer unterschiedlichen Geschwindigkeit und/oder Richtung des Transports in den Zonen 31 bis 36 und/oder der Abstände des Förderguts zueinander, wobei vorzugsweise hierzu jede Zone 31 ... 36 eine eigene Steuereinheit aufweist, welche hier aus Gründen der Übersichtlichkeit nicht gezeigt ist und welche durch die Steuereinrichtung 60 angesteuert wird.

Vorliegend ist die Fördereinrichtung beispielhaft umfassend mehrere Rollen gezeigt. Die Fördereinrichtung kann jedoch auch als ein Förderband ausgebildet sein, um das Fördergut zu transportierten, insbesondere in der Form von Paketen, wie hier gezeigt.

Die Bilderfassungseinrichtung 40 kann dabei als eine Kamera ausgeführt ist, wobei die Bildinformation als eine Kameraaufzeichnung ausgeführt ist, wobei der durch die Kamera erfasste Abschnitt mehrere, vorzugsweise mindestens zwei oder mindestens drei oder mindestens vier oder mindestens fünf, der Zonen 31 bis 35 umfasst, welche somit gleichzeitig durch die Kamera zur Zonenanpassung überwacht werden.

Gemäß einem Verfahren zur Anpassung von Zonen des Fördersystems 1 wird zunächst wenigstens eine Bildinformation erfasst, wobei die wenigstens eine Bildinformation aus einer Bilderfassung mittels einer Bilderfassungseinrichtung 40 resultiert, bei welcher zumindest der Abschnitt 41 der Förderstrecke 30 erfasst wurde. Es wird sodann die erfasste Bildinformation ausgewertet, um das Fördergut 11 bis 16 darin zu ermitteln und dann eine Anpassung der Zonen 31 bis 36 hinsichtlich ihrer Größe basierend auf dem ermittelten Fördergut 11 bis 16 initiiert.

Dabei werden die Verfahrensschritte während eines Betriebs der Fördereinrichtung 20 und eines Transports des Förderguts 11 bis 16 durch die Zonen 31 bis 36 durchgeführt, um die Zonen 31 bis 36 und vorzugsweise die Größe der Zonen 31 bis 36 dynamisch an das aktuell transportierte Fördergut 11 bis 16 anzupassen.

Fig. 2 zeigt eine Draufsicht des Fördersystems aus Fig. 1 in einem zweiten Zustand. Dabei sind abweichend von dem in Fig. 1 gezeigten Zustand die Größe der Fördergüter nicht gleich und die Zonen folglich nicht gleichverteilt. Es sind insbesondere zunächst ein größeres erstes Fördergut 11', gefolgt von zwei kleineren Fördergütern 12` und 13' und ebenso gefolgt von einem größeren Fördergut 14' gezeigt. Aufgrund der unterschiedlichen Größen des Förderguts sind auch die Zonen 31', 32', 33', 34` unterschiedlich groß vorgesehen. Die Anpassung der Anzahl und/oder Größe der Zonen 31', 32', 33', 34` kann dabei dynamisch im laufenden Betrieb des Fördersystems 1 erfolgen. Mit anderen Worten wurde die Anzahl und/oder die Größe der Zonen 31', 32', 33` und 34` dynamisch an die Größe der Fördergüter 11', 12', 13', 14' angepasst.

Wie hier zu sehen, bilden die Fördereinheiten 21 und 22 eine erste Zone 31', die Fördereinheit 23 eine zweite Zone 32', die Fördereinheit 24 eine dritte Zone 33` und die Fördereinheiten 25 und 26 eine vierte Zone 34`.

Fig. 3 zeigt eine Draufsicht des Fördersystems aus Fig. 1 in einem dritten Zustand. Dabei sind in Übereinstimmung zu dem in Fig. 2 gezeigten Zustand die Größe der Fördergüter nicht gleich groß und die Zonen nicht gleichverteilt, jedoch anders als in Fig. 2 abgebildet. Es sind insbesondere zunächst ein größeres erstes Fördergut 11", gefolgt von einem kleineren Fördergut 12", gefolgt von einem größeren Fördergut 13" ebenso gefolgt von einem kleineren Fördergut 14" gezeigt. Dabei wurden die Anzahl und die Größe der Zonen 31 ", 32", 33" und 34" dynamisch an die Größe der Fördergüter 11", 12", 13", 14" angepasst.

Wie hier zu sehen, bilden die Fördereinheiten 21 und 22 eine erste Zone 31", die Fördereinheit 23 eine zweite Zone 32", die Fördereinheiten 24 und 25 eine dritte Zone 33" und die Fördereinheit 26 eine vierte Zone 34". Beispielhaft kann eine Geschwindigkeit der Zone 31" die gleiche sein wie in Zone 33", sich jedoch von den Zonen 32" und 34" unterscheiden.

Insgesamt zeigen die abgebildeten Ausführungsformen, wie eine Kamera als Sensor für eine dynamische Zoneneinstellung eines Fördersystems verwendet werden kann.

### Bezugszeichenliste

- 1: Fördersystem
- 11-16: Fördergut
- 11'-14': Fördergut
- 11"-14": Fördergut
- 20: Fördereinrichtung
- 21-26: Fördereinheit
- 30: Förderstrecke
- 31-36: Zone
- 31'-34': Zone
- 31"-34": Zone

- 40: Bilderfassungseinrichtung
- 41: Abschnitt
- 50: Auswertungseinrichtung
- 60: Steuereinrichtung

## Patentansprüche

1. Fördersystem (1) zum Transport eines Förderguts (11 ... 16), umfassend:
- eine Fördereinrichtung (20), die ausgebildet ist, das Fördergut (11 ... 16) entlang einer Förderstrecke (30) zu transportieren, wobei die Förderstrecke (30) in mehrere Zonen (31 ... 36) unterteilt ist,
- wenigstens eine Bilderfassungseinrichtung (40), die ausgebildet ist, zumindest einen Abschnitt (41) der Förderstrecke (30) in wenigstens einer Bildinformation zu erfassen,
- eine Auswertungseinrichtung (50), die ausgebildet ist, die erfasste Bildinformation auszuwerten und das Fördergut (11 ... 16) darin zu ermitteln; und
- eine Steuereinrichtung (60), die ausgebildet ist, die Zonen (31 ... 36) basierend auf dem ermittelten Fördergut (11 ... 16) hinsichtlich ihrer Größe anzupassen.

2. Fördersystem (1) nach Anspruch 1,
**dadurch gekennzeichnet,**
**dass** die Auswertungseinrichtung (50) ausgebildet ist, einen Größenparameter in der erfassten Bildinformation zu ermitteln, welcher für eine Größe des Förderguts (11 ... 16), insbesondere für die Ausdehnung des Förderguts (11 ... 16) in Förderrichtung (F), spezifisch ist, insbesondere quantifiziert, wobei die Steuereinrichtung (60) ausgebildet ist, die Größe der Zonen (31 ... 36) basierend auf dem ermittelten Größenparameter anzupassen.

3. Fördersystem (1) nach einem der vorhergehenden Ansprüche,
**dadurch gekennzeichnet,**
**dass** die Steuereinrichtung (60) ausgebildet ist, die Größen der Zonen (31 ... 36) unterschiedlich zu definieren, um unterschiedliche Eigenschaften und vorzugsweise Größen des Fördergutes (11 ... 16) beim Transport zu berücksichtigen, sodass bevorzugt die Förderstrecke (30) durch die Zonen (31 ... 36) in Abschnitte mit unterschiedlicher Kapazität unterteilt sind.

4. Fördersystem (1) nach einem der vorhergehenden Ansprüche,
**dadurch gekennzeichnet,**
**dass** die Auswertungseinrichtung (50) ausgebildet ist, eine Kante (17) des Förderguts (11) in der erfassten Bildinformation zu ermitteln,
wobei die Steuereinrichtung (60) ausgebildet ist, die Größe der Zonen (31 ... 36) basierend auf der ermittelten Kante (17) anzupassen.

5. Fördersystem (1) nach einem der vorhergehenden Ansprüche,
**dadurch gekennzeichnet,**
**dass** die Steuereinrichtung (60) ausgebildet ist, eine Geschwindigkeit in den Zonen (31 ... 36) auf Basis der Auswertung unterschiedlich zu steuern.

6. Fördersystem (1) nach einem der vorhergehenden Ansprüche,
**dadurch gekennzeichnet,**
**dass** die Steuereinrichtung (60) ausgebildet ist, eine Richtung in den Zonen (31 ... 36) auf Basis der Auswertung unterschiedlich zu steuern.

7. Fördersystem (1) nach einem der vorhergehenden Ansprüche,
**dadurch gekennzeichnet,**
**dass** die Steuereinrichtung (60) ausgebildet ist, die Zonen (31 ... 36) jeweils unabhängig voneinander zu steuern, insbesondere hinsichtlich einer unterschiedlichen Geschwindigkeit und/oder Richtung des Transports in den Zonen (31 ... 36) und/oder der Abstände des Förderguts zueinander, wobei vorzugsweise hierzu jede Zone (31 ... 36) eine eigene Steuereinheit aufweist, welche durch die Steuereinrichtung (60) angesteuert wird.

8. Fördersystem (1) nach einem der vorhergehenden Ansprüche,
**dadurch gekennzeichnet,**
**dass** die Fördereinrichtung als ein Förderband ausgebildet ist, um das Fördergut in der Form von Paketen zu transportierten.

9. Fördersystem (1) nach einem der vorhergehenden Ansprüche,
**dadurch gekennzeichnet,**
**dass** die Bilderfassungseinrichtung (40) als eine Kamera ausgeführt ist, wobei die Bildinformation als eine Kameraaufzeichnung ausgeführt ist, wobei der durch die Kamera erfasste Abschnitt mehrere, vorzugsweise mindestens zwei oder mindestens drei oder mindestens vier oder mindestens fünf, der Zonen (31 ... 36) umfasst, welche somit gleichzeitig durch die Kamera zur Zonenanpassung überwacht werden.

10. Verfahren zur Anpassung von Zonen eines Fördersystems (1) mit einer Fördereinrichtung (20), bei welcher Fördergut (11 ... 16) entlang einer Förderstrecke (30) transportiert wird und die Förderstrecke (30) in Zonen (31 ... 36) mit unterschiedlicher Größe unterteilt ist, umfassend:
- Erfassen von wenigstens einer Bildinformation, wobei die wenigstens eine Bildinformation aus einer Bilderfassung mittels einer Bilderfassungseinrichtung (40) resultiert, bei welcher zumindest ein Abschnitt (41) der Förderstrecke (30) erfasst wurde,
- Auswerten der erfassten Bildinformation, um das Fördergut (11 ... 16) zu ermitteln,
- Initiieren einer Anpassung der Zonen (31 ... 36) hinsichtlich ihrer Größe basierend auf dem ermittelten Fördergut (11 ... 16).

11. Verfahren nach Anspruch 10,
**dadurch gekennzeichnet,**
**dass** die Verfahrensschritte während eines Betriebs der Fördereinrichtung und eines Transports des Förderguts (11 ... 16) durch die Zonen (31 ... 36) durchgeführt werden, um die Zonen (31 ... 36) und vorzugsweise die Größe der Zonen (31 ... 36) dynamisch an das aktuell transportierte Fördergut (11 ... 16) anzupassen.

12. Vorrichtung zur Datenverarbeitung, umfassend Mittel zur Ausführung der Schritte eines Verfahrens nach einem der vorhergehenden Ansprüche 10 oder 11.

13. Computerprogramm, insbesondere Computerprogrammprodukt, umfassend Befehle, die bei der Ausführung des Computerprogrammes durch einen Computer diesen veranlassen, ein Verfahren nach einem der vorhergehenden Ansprüche 10 oder 11 auszuführen.
